# EUROPEAN PATENT SPECIFICATION

(11) **EP 4 053 391 B1**
(45) Date of publication and mention of the grant of the patent: **29.04.2026**
(21) Application number: 20883035.6
(22) Date of filing: 09.09.2020
(51) Int. Cl.: F02D 41/00, G01M 15/11, G01M 15/10, F01N 3/10, F01N 11/00, F02D 41/02, F02D 41/14, F02D 41/22, G01M 15/06

(54) **ENGINE MISFIRE DIAGNOSING/DETECTING METHOD**
VERFAHREN ZUM DIAGNOSTIZIEREN/DETEKTIEREN VON FEHLZÜNDUNGEN EINES MOTORS
PROCÉDÉ DE DIAGNOSTIC/DÉTECTION DE RATÉ D'ALLUMAGE DE MOTEUR À COMBUSTION

(30) Priority: 29.10.2019 JP 2019196450
(43) Date of publication of application: 07.09.2022
(73) Proprietor: Nikki Co., Ltd., Atsugi, Kanagawa 243-0801 (JP)
(72) Inventor: INO, Takuya, Atsugi-shi, Kanagawa 243-0801 (JP); TAKIGAWA, Buso, Atsugi-shi, Kanagawa 243-0801 (JP)
(74) Representative: Boult Wade Tennant LLP
(86) International application number: PCT/JP2020/034156
(87) International publication number: WO 2021/084917

(56) References cited:
- JP-A- 2000 291 485
- JP-A- 2000 291 485
- JP-A- 2005 299 511
- JP-A- 2009 221 856
- JP-A- H0 534 243
- JP-A- H05 149 188
- JP-A- H07 293 312
- JP-A- H09 151 723
- US-A1- 2019 234 323
- US-A1- 2019 293 519

## Description

### Technical Field

The present invention relates to an engine misfire diagnosing/detecting method.

### Background Art

Conventionally, incomplete combustion due to ignition failure (so-called misfire) of an engine affects combustion efficiency, power performance, and the like of the engine, and thus is an extremely important matter for engine control. In addition, there are problems such as delay in activation of a catalyst and emission of exhaust gas harmful to the environment, and a diagnosing/detection method for misfire have been presented and conventionally performed.

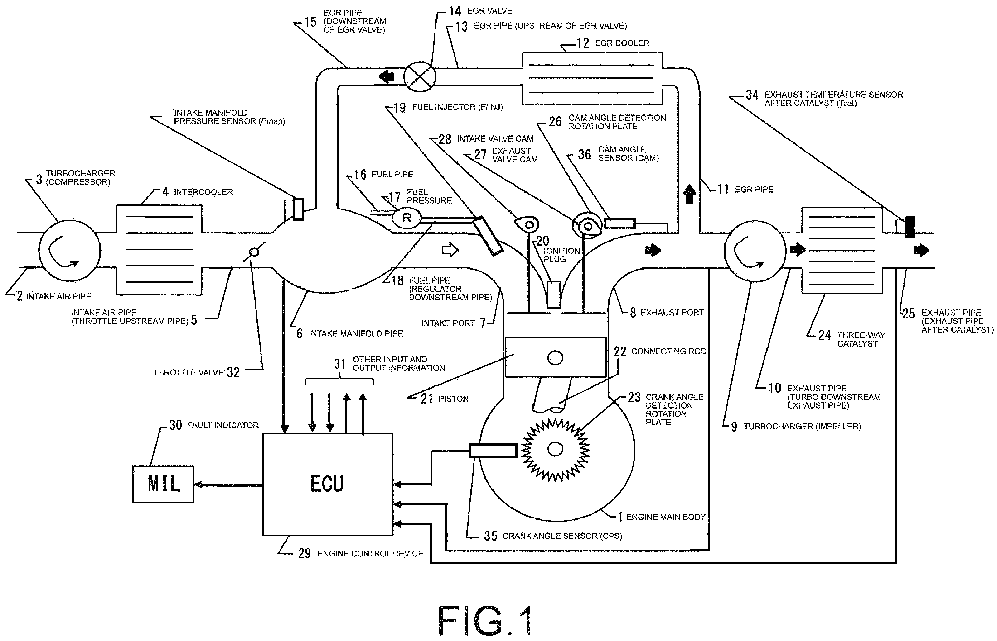

Fig. 1 illustrates an outline of a system in a conventional four-cycle spark ignition engine. As is well known, projected parts and recessed parts are arranged at predetermined angular intervals in a crank angle detection rotation plate 23 connected to a connecting rod (crankshaft) 22 of an engine main body 1. A crank angle sensor (CPS) 35 is arranged in the crank angle detection rotation plate 23 to enable detection of a rotation speed of the engine. A similar cam angle detection rotation plate 26 and a cam angle sensor (CAM) 36 are also arranged in a camshaft of an intake valve cam 28. The engine control device (ECU) 29 recognizes a crank angle of the engine and a cycle phase relationship of the four-cycle engine based on signals from the crank angle sensor (CPS) 35 and the cam angle sensor (CAM) 36.

In addition, it is also a well-known fact to optimally control the four-cycle spark ignition engine by controlling the electric valve opening/closing timing of a fuel injector 19 appropriate for the engine and controlling the discharge timing of an ignition plug 20 based on the information.

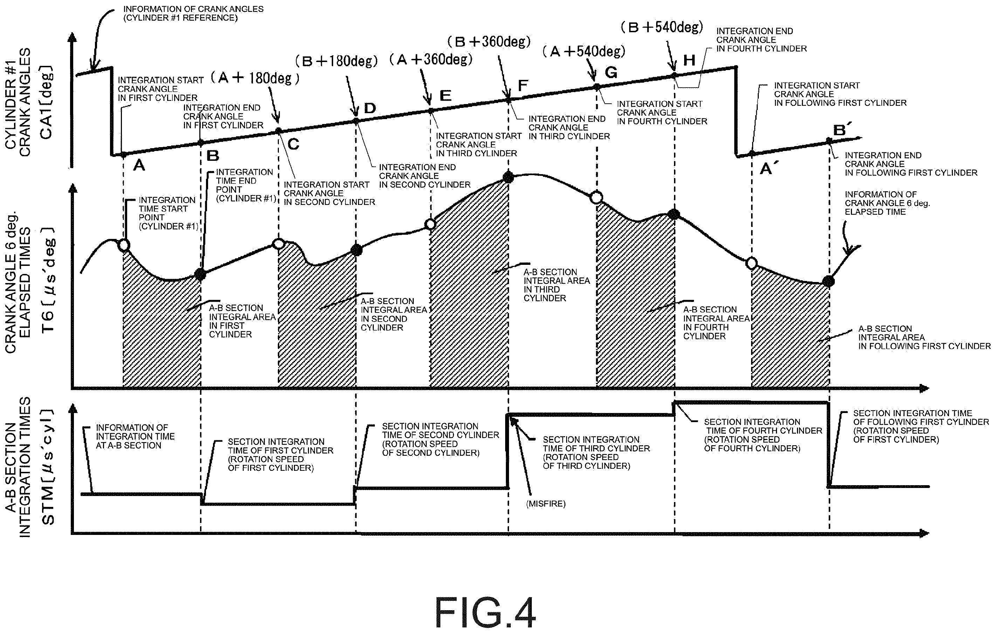

Fig. 4 illustrates an explanatory diagram of a misfire diagnosing/determining means applying the sensor information used in a conventional misfire diagnosing means for engine control illustrated in Fig. 1 as it is to a four-cylinder in-line engine as an example, and an elapsed time at an equiangular interval of, for example, 6 deg. is observed by the crank angle detection rotation plate 23 connected to the connecting rod (crankshaft) 22 illustrated in Fig. 1.

Further, 6 deg. elapsed time (T6) is integrated in a crank angle section from point A to point B, which are two crank angles different from each other in the combustion cycle of the engine, thereby calculating the crank angle elapsed time required for the expansion stroke of the cylinder.

At this time, since the cylinders are connected by one connecting rod (crankshaft) 22 (see Fig. 1), the section from the crank angle point A to the crank angle point B represents the time required for the expansion stroke in the cylinder #1, the section from the crank angle point C to the crank angle point D given a phase difference of 180 deg. to the section from the crank angle point A to the crank angle point B represents the time require for the expansion stroke in the next cylinder, the section from the crank angle point E to the crank angle point F given a phase difference of 360 deg. to the section from the crank angle point A to the crank angle point B represents the time require for the expansion stroke in the further next cylinder, and the section from the crank angle point G to the crank angle point H given a phase difference of 540 deg. to the section from the crank angle point A to the crank angle point B represents the time require for the expansion stroke in the further next cylinder.

Here, if the engine is in a normal state, the piston 21 illustrated in Fig. 1 is pushed down by combustion in the expansion stroke and torque is generated in the connecting rod (crankshaft) 22, and thus, the above-described 6 deg. elapsed time (T6) is shortened by this torque. For example, if there is misfire in the third cylinder, the torque is not obtained in the expansion stroke, and the stall occurs. Therefore, the above-described 6 deg. elapsed time (T6) becomes longer.

In this manner, the conventional misfire diagnosis means focuses on changes in the 6 deg. elapsed time (T6), and when a change is found such that the 6 deg. elapsed time (T6) of the expansion stroke of the current cylinder becomes longer than the 6 deg. elapsed time (T6) of the expansion stroke of one previous cylinder, it is determined that misfire has occurred in the target cylinder.

However, in such a conventional means for detecting misfire based on a change in the elapsed time of an expansion stroke, since all pieces of time information from the crank angle point A to the crank angle point B corresponding to the expansion stroke are integrated, for example, deceleration information similar to a misfire phenomenon may be superimposed due to disturbance such as a gap input from a tire in rough road traveling, and this often causes a problem that normal combustion is erroneously determined as a misfire state.

Therefore, for example, JP 2005-299511 A discloses an engine misfire diagnosis means for solving such a problem.

As illustrated in Fig. 5, the misfire diagnosis means disclosed in this publication discriminates a change in torque generated by engine combustion based on whether the engine rotation speed (Ne) is fast (NexpH) or slow (NexpL), reads the engine rotation speed (NexpL) at a crank angle position (Tbefore) where the speed becomes slow in the cycle and the engine rotation speed (NexpH) and at a crank angle position (Tafter) where the speed becomes fast in the cycle into a computer, and observes a speed change in the expansion stroke based on a difference between the two pieces of rotation speed information, thereby discriminating between normal combustion and misfire.

However, the misfire diagnosis means disclosed in the above-mentioned publication may be effective when used in a stationary engine such as a generator, but in an engine used in a vehicle or the like, since an engine rotating body is affected by disturbance from a tire, there is a problem that an unexpected speed change occurs at a crank angle position (Tbefore) where the rotation is supposed to be slower in a cycle or a crank angle position (Tafter) where the rotation is supposed to be faster, setting of the position cannot made appropriate, and a difference in a correct rotation speed cannot be measured, so that normal combustion may be erroneously determined as misfire.

US 2019/234323 A1 discloses systems and methods for determining the presence or absence of cylinder misfire of an internal combustion engine.

JP 2000 291485 A discloses a misfire determining device for an engine.

US 2019/293519 A1 discloses a misfire determination apparatus which includes first to third obtaining units, a calculator, and a determination unit.

### Summary of Invention

### Technical Problem

The present invention has been made to solve the above problem and has an object to provide an accurate engine misfire diagnosing/detecting method that solves a problem of erroneously determining normal combustion as a misfire state due to disturbance such as a gap input from a tire in rough road driving.

### Solution to Problem

The present invention made to solve the above problem is an engine misfire diagnosing/detecting method according to claim 1.

In addition, according to the present invention, in a case of storing in advance crank angle position information of each position of the two crank angles in a storage device in a computer of an engine control device, and calculating an index value of the combustion state by an arithmetic processing device of the computer based on information from a crank angle sensor and a cam angle sensor provided in the engine, influence by disturbance from outside can be reduced and the calculation of the angular acceleration can be simplified, as compared with a method that refers to whether the rotation speed is fast or slow.

Furthermore, according to the present invention, in a case of measuring a plurality of elapsed times of the crank angular speed at the two crank angles at mutually different points in the predetermined engine combustion cycle, and removing mechanical and electrical noise components using an average value thereof, it is possible to perform misfire diagnosis more accurately by eliminating the influence of the mechanical and electrical noise components.

Furthermore, according to the present invention, when the preliminarily determining is performed more than once and an occurrence of misfire that affects a catalyst device serving as an aftertreatment device for engine exhaust purification is suspected because of a characteristic that the presence of a failure due to misfire in the cylinder is determined without determining whether or not the temperature of the exhaust gas temperature sensor exceeds the specified value, since information from an exhaust temperature sensor (Tcat) installed downstream of the catalyst exhaust is used in addition to the misfire determination information described above, it is determined as a catalyst loss misfire failure when the temperature exceeds a specified temperature, whereby there is no erroneous determination even under a failure condition with a low misfire rate.

### Advantageous Effects of Invention

According to the present invention, it is possible to provide an accurate engine misfire diagnosing/detecting method that solves a problem of erroneously determining normal combustion as a misfire state due to disturbance from outside such as a gap input from a tire in rough road driving, by setting a position of a determined crank angle as a reference, defining an appropriate start position and end position of an expansion stroke based on the reference, calculating an angular acceleration (XTM) of the engine in the expansion stroke based on a difference in 6 deg. elapsed times (T6) of the crank angles at the position, and determining that misfire has occurred when the time information becomes slow.

### Brief Description of Drawings

Fig. 1 is a schematic view illustrating an engine system of a misfire diagnosing device according to an embodiment of the present invention and a conventional example.
Fig. 2 is an explanatory view of a misfire diagnosing/detecting method according to the present embodiment using the engine system schematic view of the misfire diagnosing device illustrated in Fig. 1.
Fig. 3 is a flowchart of a failure determination in a misfire diagnosis according to the present embodiment using the engine system schematic view of the misfire diagnosing device illustrating in Fig. 1.
Fig. 4 is an explanatory view of a conventional misfire diagnosing/detecting method.

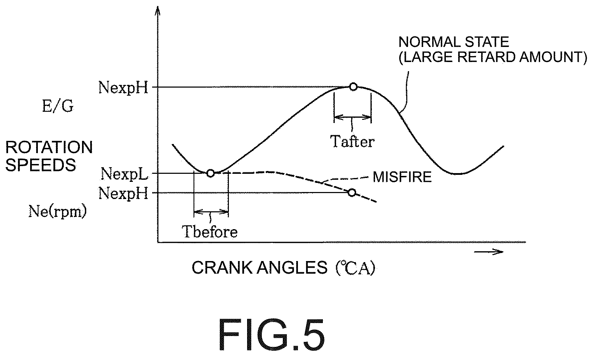

Fig. 5 is an explanatory view of another conventional misfire diagnosing/detecting method.

### Description of Embodiments

Hereinafter an embodiment of the present invention will be described with reference to the drawings.

Fig. 1 is a schematic view of a four-cycle spark ignition engine system of a misfire diagnosing device illustrating a preferred embodiment for carrying out the present invention. The misfire diagnosing device has a configuration basically similar to that of the conventional example. Projected parts and recessed parts are arranged at a predetermined angular intervals in a crank angle detection rotation plate 23 connected to a connecting rod (crankshaft) 22 of an engine main body 1. A crank angle sensor (CPS) 35 is arranged in the crank angle detection rotation plate 23 to enable detection of a rotational speed of the engine. A similar cam angle detection rotation plate 26 and cam angle sensor (CAM) 36 are arranged in a camshaft of an intake valve cam 28. The misfire diagnosing device is same as the conventional example on that the engine control device (ECU) 29 recognizes a crank angle of the engine and the cycle phase relationship of the four-cycle engine according to signals from the crank angle sensor (CPS) 35 and the cam angle sensor (CAM) 36, that the four-cycle spark ignition engine is optimally controlled, based on the information, by controlling the electric valve opening/closing timing of the fuel injector 19 appropriate to the engine and controlling the discharge timing of the ignition plug 20, that the elapsed time at an equiangular interval of, for example, 6 deg. from the crank angle detection rotation plate 23 connected to the connecting rod (crankshaft) 22, and that the occurrence of misfire is determined based on the signal from the crank angle sensor (CPS) 35 and the cam angle sensor (CAM) 36. The misfire diagnosing device is characterized in that the engine control device (ECU) 29 preliminarily determines the occurrence of misfire using the method of determining the occurrence of misfire and the signals from the crank angle sensor (CPS) 35 and the cam angle sensor (CAM) 36, and that, when a temperature of an exhaust gas temperature sensor (Tact) provided downstream of a catalyst provided in an exhaust system of the engine exceeds a specified value, confirmation of failure due to misfire is determined and displayed on a failure indicator (MIL) 30.

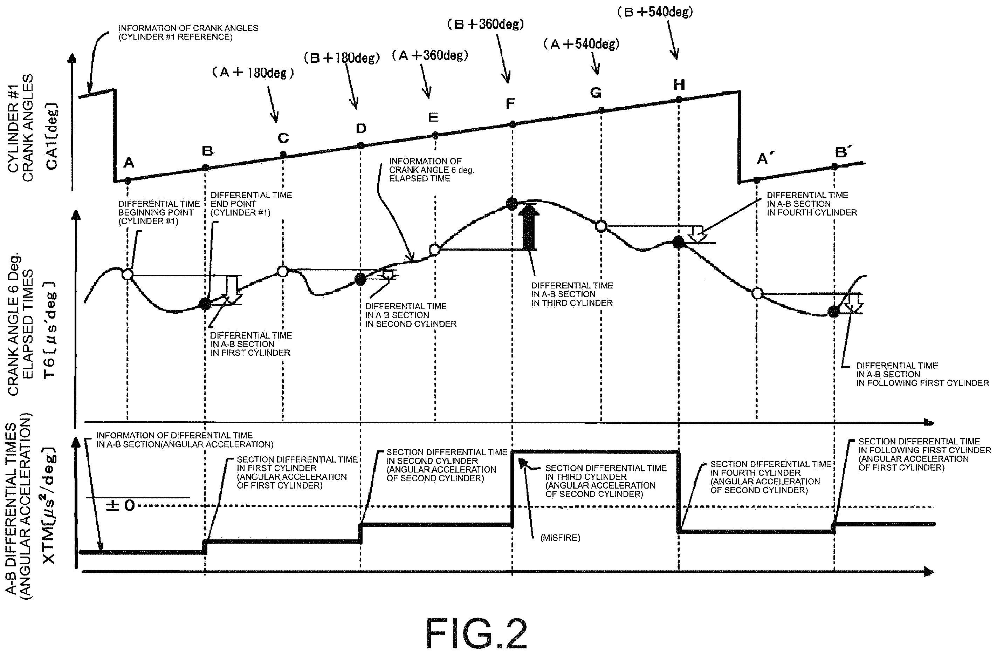

Basically, according to the present embodiment, as illustrated in Fig. 2, the expansion stroke is regarded as an angular acceleration (XTM) by differentiating the elapsed time from the crank angle point A to the crank angle point B corresponding to the expansion stroke, and the presence or absence of misfire is identified from the magnitude of the angular acceleration (XTM). Unlike the conventional example illustrated in Fig. 4, in which a simple variation of the elapsed time from the crank angle point A to the crank angle point B corresponding to the expansion stroke is used as an index value of misfire, the problem that normal combustion is erroneously determined as a misfire state due to disturbance from outside such as a gap input from a tire in rough road traveling is solved.

More specifically, according to the present embodiment, in the calculation of the angular acceleration (XTM), the information of the 6 deg. elapsed time (T6) of the crank angle only in the section of the crank angle point A and the crank angle point B is used. Therefore, even in a case where unnecessary information is superimposed on the rotation speed due to disturbance from outside, the differential information is less affected thereby, so that those disturbance can be removed.

In addition, as illustrated in Fig. 2, the angular acceleration (XTM) which is the AB differential time obtained by subtracting the 6 deg. elapsed time at the crank angle point A from the 6 deg. elapsed time at the crank angle point B has a negative value since the engine is accelerated in the expansion stroke of the normal combustion, but the angular acceleration (XTM) which is the AB differential time has a positive value when misfire occurs since the engine is decelerated in the expansion stroke. It is understood that the occurrence of misfire can be determined when the angular acceleration (XTM) which is the AB differential time exceeds the predetermined threshold value in this manner.

In particular, according to the present embodiment, the crank angle position information at each point of the two crank angles illustrated in Fig. 1 is stored in advance in a storage device in a computer in the engine control device (ECU) 29, and the index value of the combustion state is calculated by an arithmetic processing device of the computer based on the information from the crank angle sensor (CPS) 35 and the cam angle sensor (CAM) 36 provided in the engine main body 1. With this configuration, as compared with the conventional method that refers to whether the rotation speed of the engine is fast or slow, the influence of disturbance can be suppressed and the calculation of the angular acceleration (XTM) illustrated in Fig. 2 can be simplified.

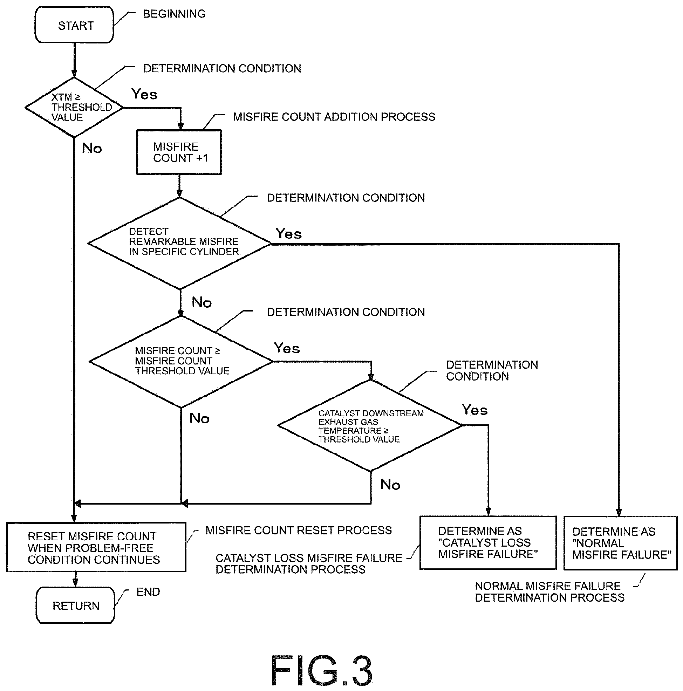

In addition, Fig. 3 illustrates a flowchart related to the determination of the misfire diagnosis method according to the embodiment. First, as described above, in a case where the angular acceleration (XTM), which is an expansion stroke recognized by differentiating the elapsed time at the of the crank angle point B from the elapsed time at the crank angle point A corresponding to the expansion stroke, exceeds a predetermined threshold value (Yes), the misfire count is added assuming that the angular acceleration has decreased due to the engine torque becoming negative due to the misfire phenomenon and that misfire has occurred.

Then, in a case where the misfire count tends to significantly increase in the specific cylinder (Yes), it is determined that misfire always occurs in a predetermined cylinder, and the preliminary determination of a normal misfire failure is made.

In addition, when the angular acceleration (XTM) exceeds the predetermined threshold value (Yes) and there is a possibility that misfire has occurred in a specific cylinder and misfire leading to catalyst erosion has occurred but the misfire count does not significantly increase (No), the misfire count is compared with the misfire count threshold value defined in advance, and when the misfire count exceeds the misfire count threshold value (Yes), when the exhaust gas temperature from the exhaust gas temperature sensor (Tact) provided in the downstream part of the catalyst provided in the exhaust system of the engine is compared with the exhaust gas temperature threshold value defined in advance, and when the exhaust gas temperature exceeds the exhaust gas temperature threshold value (Yes), misfire determination is made as a catalyst loss misfire failure.

In a case where the angular acceleration (XTM) does not exceed the threshold value (No) for a while, the misfire count is compared with a predefined misfire count threshold value, and in a case where the misfire count does not exceed the misfire count threshold value (No), and in a case where the exhaust gas temperature is compared with a predefined exhaust gas temperature threshold value and the exhaust gas temperature does not exceed the exhaust gas temperature threshold value (No), the misfire count information is reset.

As described above, according to the present embodiment, the position corresponding to the expansion stroke is calculated based on the determined crank angle position, the angular acceleration of the expansion stroke is detected from the difference between the crank angle elapsed times corresponding to the beginning and the end of the expansion stroke in which the speed change due to combustion appears, and, under a condition that the information exceeds the process threshold value and the exhaust gas temperature sensor disposed downstream of the catalyst exceeds the predetermined threshold, the misfire failure leading catalyst erosion is output as the confirmation information. Accordingly, a reliable and highly accurate engine misfire diagnosing/detecting method is provided as compared with the related art.

### Reference Signs List

- 1: Engine main body
- 2: Intake air pipe
- 3: Turbocharger (compressor)
- 4: Intercooler
- 5: Intake air pipe (throttle upstream pipe)
- 6: Intake manifold pipe (inner manifold)
- 7: Intake port
- 8: Exhaust port
- 9: Turbocharger (impeller)
- 10: Exhaust pipe (turbo downstream exhaust pipe)
- 11: EGR pipe
- 12: EGR cooler
- 13: EGR pipe (downstream of EGR cooler)
- 14: EGR valve
- 15: EGR pipe (downstream of EGR valve)
- 16: Fuel pipe
- 17: Fuel pressure regulator
- 18: Fuel pipe (regulator downstream pipe)
- 19: Fuel injector
- 20: Ignition plug
- 21: Piston
- 22: Connecting rod
- 23: Crank angle detection rotation plate
- 24: Three-way catalyst
- 25: Exhaust pipe (exhaust pipe after catalyst)
- 26: Cam angle detection rotation plate
- 27: Exhaust valve cam
- 28: Intake valve cam
- 29: Engine control device (ECU)
- 30: Fault Indicator (MIL)
- 31: Other input and output information
- 32: Throttle valve
- 33: Intake manifold pressure sensor (Pmap)
- 34: Exhaust temperature sensor after catalyst (Tcat)
- 35: Crank angle sensor (CPS)
- 36: Cam angle sensor (CAM)

## Claims

1. An engine misfire diagnosing/detecting method comprising:
a. defining in advance a first crank angle and a second crank angle at mutually different points in an engine combustion cycle, the first crank angle and the second crank angle at an angular interval;
b. calculating, as an index value of a combustion state, an engine angular acceleration (XTM) near an expansion stroke as a differential time obtained by subtracting a 6 deg. elapsed time (T6) at the first crank angle corresponding to a beginning of the expansion stroke from a 6 deg. elapsed time (T6) at the second crank angle corresponding to an end of the expansion stroke;
c. comparing the index value with a predetermined threshold value and preliminarily determining that the angular acceleration (XTM) has been lowered by engine torque becoming negative due to a misfire phenomenon and that misfire is occurring when the index value exceeds the predetermined threshold value; and
d. determining the presence of a failure due to the misfire when the temperature of an exhaust gas temperature sensor provided downstream of a catalyst disposed in an exhaust system of the engine exceeds a specified value.

2. The engine misfire diagnosing/detecting method according to claim 1, wherein:
step c comprises adding to a misfire count when it is preliminary determined that the angular acceleration (XTM) has been lowered by engine torque becoming negative due to a misfire phenomenon and that misfire is occurring when the index value exceeds the predetermined threshold value;
step d comprises comparing the misfire count to a predetermined misfire count threshold value and the presence of a failure due to the misfire is determined when the misfire count exceeds the predetermined misfire count threshold value and the temperature of an exhaust gas temperature sensor provided downstream of a catalyst disposed in an exhaust system of the engine exceeds a specified value; and
the method further comprises, between steps c and d, the step of: determining that the misfire is a normal misfire failure when the misfire count increases in a specific cylinder.

3. The engine misfire diagnosing/detecting method according to any preceding claim, further comprising:
storing in advance crank angle position information of each position of the first and second crank angles in a storage device in a computer of an engine control device; and
calculating the index value of the combustion state by an arithmetic processing device of the computer based on information from a crank angle sensor and a cam angle sensor provided in the engine.

4. The engine misfire diagnosing/detecting method according to any preceding claim, further comprising:
measuring a plurality of elapsed times of the crank angular speed at the first and second crank angles at mutually different points in the predetermined engine combustion cycle; and
removing mechanical and electrical noise components using an average value thereof.

## Patentansprüche

1. Verfahren zur Diagnose/Erkennung von Motorfehlzündungen umfassend:
a. Definieren eines ersten Kurbelwellenwinkels und eines zweiten Kurbelwellenwinkels an voneinander verschiedenen Punkten im Verbrennungszyklus eines Motors im Voraus, wobei das erste Kurbelwellenwinkel und das zweite Kurbelwellenwinkel in einem Winkelintervall zueinander liegen;
b. Berechnen der Winkelbeschleunigung (XTM) des Motors in der Nähe eines Arbeitstakts als Differenzzeit, die durch Subtraktion einer verstrichenen Zeit (T6) von 6 Grad beim ersten Kurbelwellenwinkel, der dem Beginn des Arbeitstakts entspricht, von einer verstrichenen Zeit (T6) von 6 Grad beim zweiten Kurbelwellenwinkel, der dem Ende des Arbeitstakts entspricht, erhalten wird;
c. Vergleichen des Indexwertes mit einem vorbestimmten Schwellenwert und vorläufiges Feststellen, dass die Winkelbeschleunigung (XTM) durch ein negatives Motordrehmoment aufgrund einer Fehlzündung verringert wurde, und dass eine Fehlzündung auftritt, wenn der Indexwert den vorbestimmten Schwellenwert überschreitet; und
d. Feststellen des Vorliegens eines Fehlers aufgrund der Fehlzündung, wenn die Temperatur eines Abgastemperatursensor, der stromabwärts eines in einem Abgassystem angeordneten Katalysators vorgesehen ist, einen festgelegten Wert überschreitet.

2. Verfahren zur Diagnose/Erkennung von Motorfehlzündungen nach Anspruch 1, wobei:
Schritt c Erhöhen eines Fehlzündungszählwerts umfasst, wenn vorläufig festgestellt wird, dass die Winkelbeschleunigung (XTM) durch ein negatives Motordrehmoment aufgrund einer Fehlzündung verringert wurde, und dass eine Fehlzündung auftritt, wenn der Indexwert den vorbestimmten Schwellenwert überschreitet;
Schritt d das Vergleichen des Fehlzündungszählwerts mit einem vorbestimmten Fehlzündungsschwellenwert umfasst und das Vorhandensein eines Fehlers aufgrund der Fehlzündung festgestellt wird, wenn der Fehlzündungszählwert den vorbestimmten Fehlzündungsschwellenwert überschreitet und die Temperatur eines Abgastemperatursensors, der stromabwärts eines im Abgassystem des Motors angeordneten Katalysators vorgesehen ist, einen bestimmten Wert überschreitet; und
das Verfahren ferner, zwischen den Schritten c und d, den folgenden Schritt umfasst: Feststellen, dass es sich bei der Fehlzündung um einen normalen Fehlzündungsfehler handelt, wenn der Fehlzündungszählwert in einem bestimmten Zylinder zunimmt.

3. Verfahren zur Diagnose/Erkennung von Motorfehlzündungen nach einem vorstehenden Anspruch, ferner umfassend:
Speichern der Kurbelwellenwinkelpositionsinformationen jeder Position des ersten und zweiten Kurbelwellenwinkels in einem Speichermedium im Computer einer Motorsteuervorrichtung; und
Berechnen des Indexwertes des Verbrennungszustands durch eine arithmetische Verarbeitungsvorrichtung des Computers auf Grundlage von Informationen eines Kurbelwellenwinkelsensors und eines Nockenwellenwinkelsensors, die im Motor vorgesehen sind.

4. Verfahren zur Diagnose/Erkennung von Motorfehlzündungen nach einem vorstehenden Anspruch, ferner umfassend:
Messen einer Vielzahl von verstrichenen Zeiten der Kurbelwellenwinkelgeschwindigkeit bei den ersten und zweiten Kurbelwellenwinkeln an voneinander verschiedenen Punkten im vorbestimmten Verbrennungszyklus des Motors; und
Entfernen mechanischer und elektrischer Störkomponenten unter Verwendung eines Mittelwerts derselben.

## Revendications

1. Procédé de diagnostic/détection de raté d'allumage de moteur comprenant :
a. la définition à l'avance d'un premier angle de vilebrequin et un second angle de vilebrequin à des points mutuellement différents dans un cycle de combustion du moteur, le premier angle de vilebrequin et le second angle de vilebrequin à un intervalle angulaire ;
b. le calcul, comme une valeur d'indice d'un état de combustion, d'une accélération angulaire du moteur (XTM) près d'une course d'expansion comme un temps différentiel obtenu en soustrayant un temps écoulé de 6 degrés (T6) au premier angle de vilebrequin correspondant à un début de la course d'expansion d'un temps écoulé de 6 degrés (T6) au second angle de vilebrequin correspondant à une fin de la course d'expansion ;
c. la comparaison de la valeur d'indice à une valeur seuil prédéterminée et la détermination préliminaire que l'accélération angulaire (XTM) a été réduite par un couple moteur devenant négatif en raison d'un phénomène de raté d'allumage et que le raté d'allumage se produit lorsque la valeur d'indice dépasse la valeur seuil prédéterminée ; et
d. la détermination de la présence d'une défaillance due au raté d'allumage lorsque la température d'un capteur de température des gaz d'échappement placé en aval d'un catalyseur disposé dans un système d'échappement du moteur dépasse une valeur spécifiée.

2. Procédé de diagnostic/détection de raté d'allumage selon la revendication 1, dans lequel :
l'étape c comprend l'ajout à un compte de ratés d'allumage lorsqu'il est déterminé au préalable que l'accélération angulaire (XTM) a été réduite par le couple moteur devenant négatif en raison d'un phénomène de raté d'allumage et que le raté d'allumage se produit lorsque la valeur de l'indice dépasse la valeur seuil prédéterminée ;
l'étape d comprend la comparaison du nombre de ratés d'allumage à une valeur seuil prédéterminée de nombre de ratés d'allumage et la présence d'une défaillance due au raté d'allumage est déterminée lorsque le nombre de ratés d'allumage dépasse la valeur seuil prédéterminée de ratés d'allumage et que la température d'un capteur de température des gaz d'échappement placé en aval d'un catalyseur disposé dans un système d'échappement du moteur dépasse une valeur spécifiée ; et
le procédé comprend en outre, entre les étapes c et d, l'étape de : détermination que le raté d'allumage est une défaillance normale lorsque le nombre de ratés d'allumage augmente dans un cylindre spécifique.

3. Procédé de diagnostic/détection de raté d'allumage selon une quelconque revendication précédente, comprenant en outre :
le stockage à l'avance d'informations de position angulaire de vilebrequin pour chaque position des premier et second angles de vilebrequin dans un dispositif de stockage dans un ordinateur d'un dispositif de commande de moteur ; et
le calcul de la valeur d'indice de l'état de combustion par un dispositif de traitement arithmétique de l'ordinateur sur la base d'informations provenant d'un capteur d'angle de vilebrequin et d'un capteur d'angle d'arbre à cames disposés dans le moteur.

4. Procédé de diagnostic/détection de raté d'allumage selon une quelconque revendication précédente, comprenant en outre :
la mesure d'une pluralité de temps écoulés de la vitesse angulaire de vilebrequin aux premier et second angles de vilebrequin à des points mutuellement différents dans le cycle de combustion prédéterminé du moteur ; et
l'élimination des composantes de bruit mécanique et électrique à l'aide d'une valeur moyenne de celles-ci.
